Europäisches Patentamt

European Patent Office

Office européen des brevets

(19)

(11) Veröffentlichungsnummer: **0 254 772 B1**

(12) **EUROPÄISCHE PATENTSCHRIFT**

(45) Veröffentlichungstag der Patentschrift: **04.12.91**

(51) Int. Cl.⁵: **G01B 11/08**

(21) Anmeldenummer: **86117836.6**

(22) Anmeldetag: **20.12.86**

(54) **Verfahren zur Ermittlung des Durchmessers der Räder von Schienenfahrzeugen und Einrichtung hierzu.**

(30) Priorität: **29.07.86 DE 3625564**

(43) Veröffentlichungstag der Anmeldung:
**03.02.88 Patentblatt 88/05**

(45) Bekanntmachung des Hinweises auf die
Patenterteilung:
**04.12.91 Patentblatt 91/49**

(84) Benannte Vertragsstaaten:
**DE FR GB IT**

(56) Entgegenhaltungen:
**DE-A- 3 432 355**
**DE-A- 3 432 361**

(73) Patentinhaber: **Wilhelm Hegenscheidt Gesellschaft mbH
Neusser Strasse 3
W-5140 Erkelenz(DE)**

(72) Erfinder: **Obrig, Hans W., Dr.-Ing.
Gillhausenstrasse 5
W-4300 Essen(DE)**
Erfinder: **Wittkopp, Helmut, Dipl.-Ing.,
Cusanushof 87
W-5140 Erkelenz(DE)**
Erfinder: **Ewald, Nis-Friedrich, Dipl.-Ing.
Vogtsgarten 52
W-405 Moenchengladbach 5(DE)**

(74) Vertreter: **Liermann, Manfred
Schillingsstrasse 335
W-5160 Düren(DE)**

## Beschreibung

Die Erfindung betrifft ein Verfahren zur Ermittlung des Durchmessers der Räder von Schienenfahrzeugen mit je Rad einer eine Lauffläche aufweisenden Umfangsfläche, sowie eine Einrichtung zur Durchführung des Verfahrens.

Verfahren und Einrichtungen der vorgenannten Art sind bereits bekannt geworden durch die DE-OS 3432355 und die DE-OS 3432361. In diesen Schriften wird vorgeschlagen, mittels parallel zur Schienenoberfläche im Abstand zueinander angeordneten Lichtschranken eine Sehnenlänge über den Spurkranz zu bestimmen und hieraus auf den Durchmesser des Sprukranzes zu schließen, wobei weiter vorgeschlagen wird, die Spurkranzhöhe zu bestimmen und hierdurch auf den Raddurchmesser in der Meßkreisebene zurückzuschließen. Über Lichtschranken aber lassen sich bestimmte Abmessungen nur ungenau bestimmen. Der Rückschluß vom Spurkranzdurchmesser über die Spurkranzhöhe auf den Laufflächendurchmesser in der Meßkreisebene enthält wie jede Form der indirekten Messung weitere Ungenauigkeiten. Ein auf solche Art bestimmter Meßkreisdurchmesser eines Eisenbahnrades ist für eine Weiterverwendung beispielsweise an Reprofilierungsmaschinen zu ungenau.

Ausgehend von dem vorbeschriebenen Stand der Technik liegt der Erfindung die Aufgabe zugrunde, die indirekte Messung zu beseitigen und in direkter Messung eindeutige Kenngrößen für eine Durchmesserbestimmung des Laufflächendurchmessers des Rades in der Meßkreisebene vorzuschlagen, wobei das Verfahren anwendbar sein soll auch auf einen eingebauten Radsatz, der sich im Gleis bewegt.

Diese Aufgabe ist erfindungsgemäß dadurch gelöst, daß die Lage von zwei in Umfangsrichtung versetzten, beliebigen Punkten auf der Lauffläche dadurch definiert wird, daß zwei elektromagnetische Strahlenbündel mit zur Laufebene bekannter Winkellage die Umfangsfläche anstrahlen, wobei die elektromagnetischen Strahlenbündel in einer Ebene senkrecht zur Radachse verlaufen und zwei angenähert punktförmig auswertbare Reflexionsflächen an der Lauffläche erzeugen und wobei die relative Lage der Strahlenquellen zueinander bekannt ist, und daß die Lage der punktförmigen Reflexionsfläche relativ zueinander über geeignete Sensoren oder Empfänger gleichzeitig ermittelt und daraus die Bogenhöhe des Bogens über der die beiden Punkte verbindenden Sehne berechnet wird, woraus schließlich der Raddurchmesser bestimmt wird. Durch die gleichzeitige Antastung der genannten Punkte und die Bestimmung von deren räumlicher Lage kann eine Sehne bestimmt werden, die z.B. zusammen mit dem Aufstandspunkt oder der Bogenhöhe, wenn die Sehne parallel zur Schienenoberfläche liegt, eindeutig einen Kreis und damit dessen Durchmesser bestimmt. Die gleichzeitige Antastung der Punkte sorgt hierbei für eine direkte Bestimmung, weil eine zwischen den Antastungen verstreichende Zeit mit den dazu gehörigen sich verändernden Bedingungen nicht berücksichtigt werden muß. Irgendwelche Beschleunigungen oder Verzögerungen oder Lageänderungen können daher nicht mehr maßverfälschend in die Messung eingehen. Von entscheidender Bedeutung für die Erfindung ist es also, daß die Kenngrößen, die einen ganz bestimmten Kreis definieren, in ihrer Lage gleichzeitig erfaßt werden. Eine Lageveränderung des zu messenden Rades soll während des Meßvorganges möglichst klein gehalten werden. Idealerweise sollte diese Lageveränderung gleich Null sein. Das gleichzeitige Antasten der notwendigen Punkte unter einem bekannten Winkel und das Erfassen dieser Punkte jeweils mit bekannter Anordnung der zugehörigen Geräte schafft, wenn auch bei vergrößertem Rechenaufwand, einen großen Freiraum für die Position des Rades, in der eine Messung oder Antastung durchgeführt werden kann. Die Position des zu messenden und anzutastenden Rades kann dabei sogar derart unkritisch werden, daß eine manuelle Auslösung einer zuzuordnenden Einrichtung möglich wird. Auf jeden Fall aber ermöglicht dieses Verfahren eine exakte Bestimmung der notwendigen Punkte und ermöglicht gleichzeitig einen Vorrichtungsaufbau, bei dem die Radposition für die Messung unkritisch ist. Es sei darauf hingewiesen, daß eine punktförmig auswertbare Reflexionsfläche eine endliche Ausdehnung aufweist. Diese Ausdehnung soll einerseits sehr klein sein um hohe Meßgenauigkeiten zu erreichen und soll andererseits ausreichend groß sein um genügend Energie für eine sichere Erfassung zu reflektieren. Eine gewisse endliche Ausdehnung ist auch notwendig um zu verhindern, daß ein -im Durchmesser sehr dünner- Strahl z.B. an unregelmäßigen Mikrostrukturen in völlig unerwartete Richtungen reflektiert wird. Um die Nachteile einer unerwünschten endlichen Ausdehnung der Reflexionsfläche zu kompensieren, kann eine sogen. Schwerpunktauswertung dieser Reflexionsfläche erfolgen. Genauer gesagt wird bei einem solchen Verfahren eine Schwerpunktauswertung der im Empfänger abgebildeten Reflexionsfläche durchgeführt.

Die Rechnung vereinfachend und die Meßgenauigkeit vergrößernd wird noch vorgschlagen, daß die Punkte, die auf der Lauffläche gleichzeitig angetastet werden zur Bestimmung des gewünschten Durchmessers, alle in der Meßkreisebene liegen. Dies ist in der Regel die Ebene, deren Durchmesser bei Rädern von Schienenfahrzeugen bestimmt werden soll. Die Lage dieser Ebene ist in Normwerken definiert.

Es ist nach der Erfindung noch vorgeschlagen, daß jeder Punkt auf einer anderen Seite einer Ebene durch die Radachse und den Aufstandspunkt des Rades auf einer Schiene liegt. Dies ermöglicht eine Vereinfachung sowohl des Meßvorganges selbst als auch des nachfolgenden Rechenvorganges. Insbesondere ermöglicht eine solche Anordnung bei Bedarf eine automatische Einmittung des zu messenden Rades relativ zu den hierfür notwendigen Einrichtungen, bevor gleichzeitig alle notwendigen Punkte angetastet werden.

Alternativ wird noch vorgeschlagen, daß beide Punkte auf einer Seite einer Ebene durch die Radachse und den Aufstandspunkt des Rades auf einer Schiene liegen. Durch die Antastung dieser zwei auf einer Seite der genannten Ebene liegenden Punkte kann ebenfalls, beispielsweise zusammen mit dem Aufstandspunkt, eindeutig der Durchmesser des Meßkreises des Rades bestimmt werden.

Nach einer Ausgestaltung der Erfindung ist noch vorgeschlagen, daß mit jeweils unterschiedlichen, aber für jeden Rechenvorgang gleichzeitig angetasteten Punkten mehrfach der zugehörige Raddurchmesser (Kreisdurchmesser) jeweils unabhängig voneinander berechnet wird. Hierdurch können Formunregelmäßigkeiten der Lauffläche erfaßt und bei Bedarf gemittelt werden.

Weiter ergänzend ist nach der Erfindung noch vorgeschlagen, daß zusätzlich mittels einer Profilvermessung das Ist-Profil der Lauffläche eines Rades bestimmt wird. Hierdurch gelingt es auch dann, wenn, aus welchen Gründen auch immer, nicht exakt in der Meßkreisebene angetastet wurde, über die Profilkontur eine Rückrechnung in die Meßkreisebene möglich wird, ohne daß Seitenverschiebungen des Rades auf der Schiene das Meßergebnis verfälschen könnten.

Es ist weiter nach der Erfindung vorgeschlagen, daß ein Rad sich während der Messung auf einer Laufebene innerhalb einer definierten Meßstrecke bewegt. Ein Stillstand ist nicht erforderlich. Ein zu messendes Rad kann sich durch eine Meßstrecke hindurch bewegen, so daß eine Vielzahl von Stopps bei der Vermessung vermieden werden kann. Hierbei, dies sei besonders betont, kommt es nicht darauf an, ob sich tatsächlich das Rad bewegt. Es kommt nur darauf an, daß sich Rad und Einrichtung für die Durchführung eines beschriebenen Meßverfahrens relativ zueinander bewegen.

In einer Ausgestaltung der Erfindung ist vorgeschlagen, daß als Strahlenbündel ein Laserstrahl verwendet wird. Ein Laserstrahl wird besonders gut beherrscht, hinterläßt eine ausreichend kleine punktförmige Reflexionsfläche, wobei die Reflexion über ebenfalls gut beherrschte optische Einrichtungen erfaßt werden kann. Hierbei sind im Stand der Technik Geräte bekannt, die eine Positionsbestimmung des erfaßten Lichtpunktes ermöglichen, wenn ihre eigene Position bekannt ist.

In weiterer Ausgestaltung der Erfindung ist vorgeschlagen, daß die Antastung in unterschiedlichen Wegpositionen des Rades auf der Laufebene mindestens einmal wiederholt wird. Hierdurch können sowohl Fehler des Gerätes selbst als auch Formfehler der Lauffläche erkannt und bei Bedarf gemittelt oder eliminiert werden.

Zur Durchführung des erfindungsgemäßen Verfahrens wird eine Einrichtung zur Ermittlung des Durchmessers der Räder von Schienenfahrzeugen mit je Rad einer eine Lauffläche aufweisenden Umfangsfläche vorgeschlagen mit mindestens einer in einem Meßbereich angeordneten Laufebene z.B. für die Lauffläche mindestens eines Rades, mindestens eine Einrichtung, enthaltend mindestens eine Strahlenquelle zur Erzeugung von mindestens zwei punktförmigen Reflexionsflächen mittels elektromagnetischer Strahlenbündel an der Lauffläche eines Rades, mindestens zwei Sensor- oder Empfangseinrichtungen zur Erfassung der genannten Reflexionsflächen sowie eine Steuer- und Auswerteinrichtung, verbunden mit einer Ausgabeeinheit, wobei die Steuer- und Auswerteeinrichtung sowohl mit den Empfangseinrichtungen als auch mit der Einrichtung zur Erzeugung der Reflektionsflächen verbunden ist und wobei diese Einrichtung und die genannten Empfangseinrichtungen derart relativ zueinander und zur Laufebene angeordnet sind, daß die Erzeugung der reflektionsflächen und deren Erfassung innerhalb des Meßbereiches möglich ist. Die den Meßbereich durchquerende Laufebene stützt das zu messende Rad z.B. an der Lauffläche ab, so daß sich das Rad beispielsweise durch eine Abrollbewegung durch den Meßbereich hindurch bewegen kann. Über eine hierfür vorgesehene Einrichtung, beispielsweise über einen Laser, werden beispielsweise durch Aufspaltung mittels eines halbdurchlässigen Spiegels zwei Laserstrahlen erzeugt, die so gerichtet werden, daß sie in bekannter Lage und Neigung, während das Rad den Meßbereich durchrollt, mindestens zeitweilig z.B. in der Meßkreisebene auf die Lauffläche des Rades auftreffen und dort einen Lichtpunkt erzeugen. Es sind dies somit zeitweilig erfaßbare Markierungen, die von entsprechenden Empfangseinrichtungen als in einer bestimmten Position vorhanden, erkannt werden können. Die Steuer- und Auswerteeinrichtung sorgt hierbei dafür, daß die Einrichtung aktiv wird, wenn sich das Rad im Erfassungsbereich der einzelnen Antastund Sensormittel befindet. Das Antastergebnis wird dann über die Auswerteeinrichtung errechnet und über eine Ausgabeeinheit ausgegeben. Anstelle der Ausgabeeinheit kann auch die Steuerung einer Werkzeugmaschine vorgesehen sein.

Ergänzend ist vorgeschlagen, daß mindestens eine Strahlenquelle zur Erzeugung einer Markierung ein Laser ist. Ein Laser ist gut beherrschbar und relativ wenig störanfällig, so daß hohe Funktionssicherheit erreicht wird. Darüber hinaus kann durch die Verwendung eines Lasers die Arbeit der Einrichtung mindestens in Teilbereichen visuell beobachtet werden.

Nach einer ergänzenden Ausgestaltung ist noch vorgesehen, daß mindestens eine der genannten Empfangseinrichtungen eine sogen. CCD-Kamera ist. Solche Kameras sind bereits bekannt und eigenen sich hervorragend zur Erfassung von Lichtsignalen, so daß sie für die Erfassung des Reflexionslichtes eines Laserpunktes hervorragend verwendbar sind.

Es ist weiter nach der Erfindung vorgeschlagen, daß der Einrichtung eine Profilerfassungseinrichtung zugeordnet ist. Eine solche Profilerfassungseinrichtung ist beschrieben in der nicht vorveröffentlichten europäischen Patentanmeldung EP-A2-228 500. In Kombination mit der hier beschriebenen Durchmessererfassungseinrichtung kann eine solche Profilerfassungseinrichtung die Durchmesserberechnung des Meßkreisdurchmessers besonders dann erleichtern, wenn die angetasteten Punkte nicht exakt in der Meßkreisebene liegen.

Ergänzend ist vorgeschlagen, daß die Profilerfassungseinrichtung eine Auswerteeinrichtung ausweist, die mit der Auswerteeinrichtung der Durchmessererfassungseinrichtung verbunden ist. Hierdurch können die jeweils erfaßten Daten und die Berechnungsergebnisse ausgetauscht und direkt verwertet werden.

Es ist ebenfalls nach der Erfindung vorgeschlagen, daß Schaltmittel vorgesehen sind, die die Einrichtung aktivieren, wenn sich ein Rad im Arbeitsbereich der Einrichtung befindet. Hierdurch kann die Einrichtung vollautomatisch arbeiten.

Weiter ist noch vorgeschlagen, daß die elektromagnetischen Strahlenbündel vertikal nach oben gerichtet sind und in der Meßebene einen Abstand zueinander aufweisen, der kleiner ist als der Durchmesser des kleinsten erwarteten Rades. Hierdurch kann eine Nachjustierung auf unterschiedliche Raddurchmesser entfallen.

Schließlich ist bei einem Verfahren der eingangs beschriebenen Art noch vorgeschlagen, daß die Lage von zwei in Umfangsrichtung versetzten Punkten auf der Lauffläche dadurch definiert wird, daß zur Bestimmung des ersten Punktes ein elektromagnetisches Strahlenbündel mit zur Laufebene bekannter Winkellage die Umfangsfläche anstrahlt, wobei das elektromagnetische Strahlenbündel in einer Ebene senkrecht zur Radachse verläuft und eine angenähert punktförmige auswertbare Reflexionsfläche an der Lauffläche erzeugt und daß der zweite Punkt der Aufstandspunkt des Rades auf einer Schiene ist, und daß die Lage der punktförmigen Reflektionsfläche und des Aufstandspunktes relativ zueinander über geeignete Sensoren oder Empfänger gleichzeitig ermittelt und daraus die Bogenhöhe des Bogens über der die beiden Punkte verbindenden Sehne berechnet wird, woraus schließlich der Raddurchmesser bestimmt wird. Sind diese beiden Punkte in ihrer relativen Lage zueinander bekannt, so liegt hierdurch wegen der zusätzlichen Bedingung, daß ein Punkt der Aufstandspunkt ist, ein eindeutiger Kreis durch diese beiden Punkte fest. Dies deswegen, weil die zwischen den beiden Punkten aufgespannte Sehne die Basis eines gleichschenkligen Dreiecks ist, deren Schenkellängen dem Radius des Kreises entsprechen. Die Mittelsenkrechte zu dieser Basis ist die Winkelhalbierende des Spitzenwinkels des gleichschenkligen Dreiecks, wobei dieser halbe Winkel bereits bekannt ist durch die Lage des angetasteten Punktes, der nicht Aufstandspunkt ist. Der Durchmesser des Kreises ist damit eindeutig bestimmt.

Die Erfindung soll nun anhand der beigefügten Skizzen, die lediglich Funktionsschemata darstellen, näher erläutert werden. Es zeigen:

Figur 1    Prinzipielle Meßanordnung

Figur 2    Ansicht der Anordnung nach Figur 1 in Richtung des Pfeils A

Figur 3    vereinfachte Darstellung wie Figur 1, jedoch mit parallel zueinander verlaufenden Strahlenbündeln

Figur 4    Ansicht in Richtung des Pfeils B nach Figur 3

Figur 5    Ansicht wie Figur 3, jedoch mit zusätzlichen Elementen

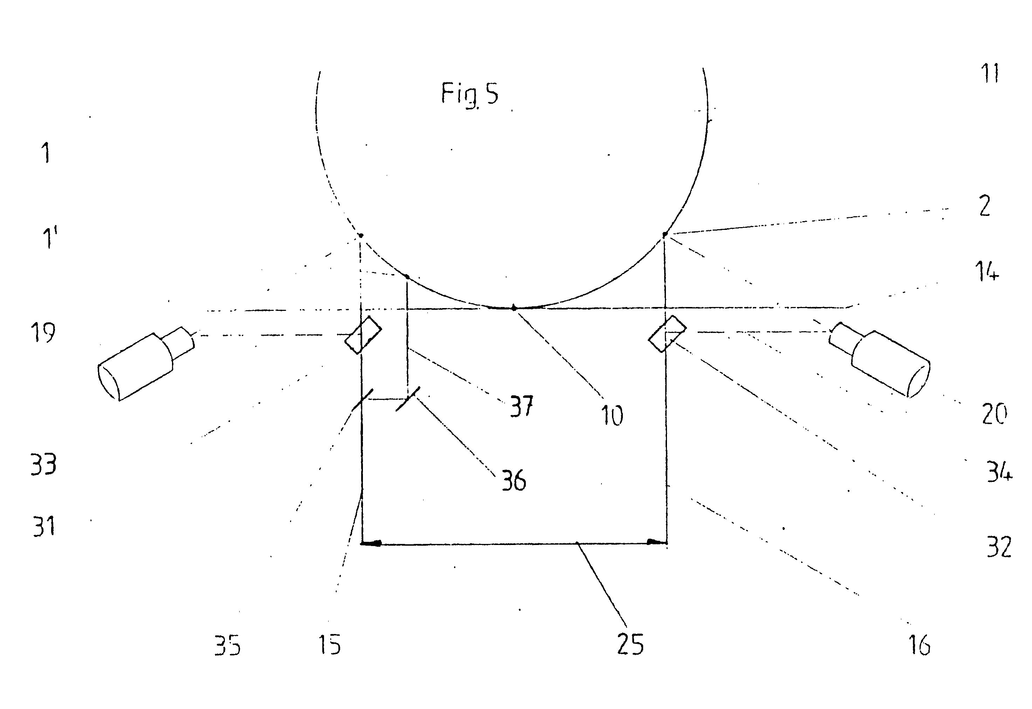

Figur 5    Darstellung zur Erläuterung eines Rechenganges

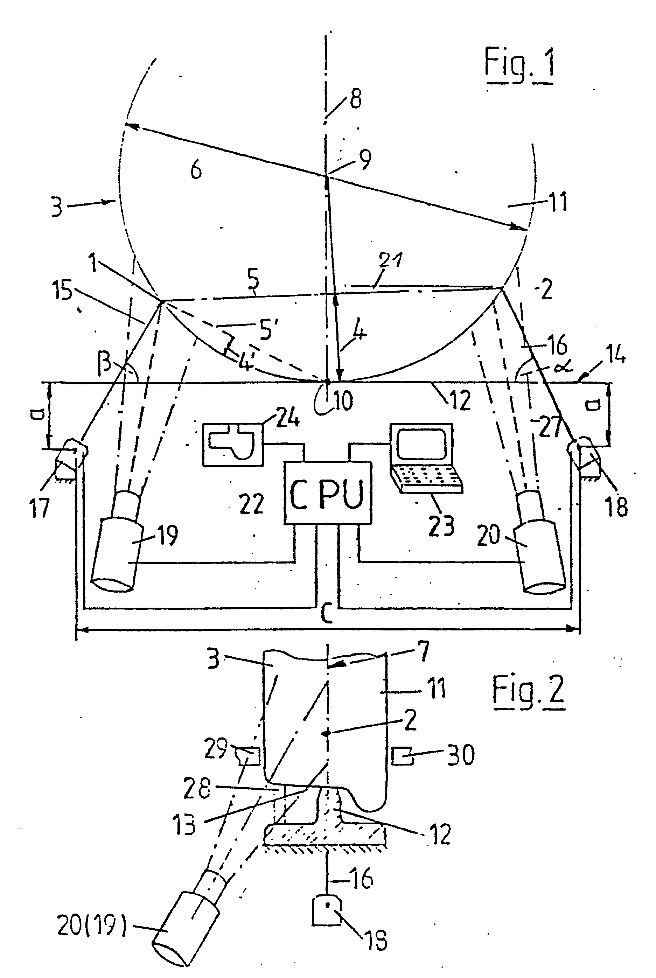

In Figur 1 ist in Seitenansicht der schematische Aufbau einer erfindungsgemäßen Einrichtung zur Durchführung des erfindungsgemäßen Verfahrens dargestellt. Auf einer als Schiene 12 ausgebildeten Laufebene 14 kann sich ein Rad 11 eines nicht näher dargestellten Radsatzes beispielsweise rollend bewegen. Die Schiene 12 kann sich hierbei in geeigneter Weise an einem ebenfalls nicht näher dargestellten Fundament abstützen.

In der dargestellten Anordnung nach Figur 1 liegt das Rad 11 in einer für die Durchführung der notwendigen Antastung geeigneten Position. In dieser Position sind im Ausführungsbeispiel links und rechts neben einer Ebene 8 die durch die Radachse 9 und den Aufstandspunkt 10 verläuft, einerseits beispielsweise als Laser ausgebildete Strahlenquellen 17 und 18 und diesen zugeordnet andererseits Empfänger 19 und 20, beispielsweise in der Ausführungsform als CCD-Kameras, angeordnet. Die Strahlenquellen 17 und 18 können hierbei unterhalb der Schiene 12 so angeordnet sein, daß ihre elektromagnetischen Strahlenbündel 15 und 16 in der Meßkreisebene 7 liegen (siehe Figur 2). Die Strahlenquellen 17 und 18 sind hierbei in einem bekannten Abstand "a" unterhalb der Laufebene 14 angeordnet und weisen hierbei einen seitlichen Abstand "c" zueinander auf. Die Strahlenquellen 17 und 18 sind hierbei so angeordnet, daß ihr elektromagnetisches Strahlenbündel 15 bzw. 16 unter einem spitzen Winkel Beta bzw. Alpha zur Laufebene 14 und zueinander konvergierend austritt. Letzteres ist jedoch nicht zwingend. Notwendig ist lediglich, daß die Winkel bekannt sind..

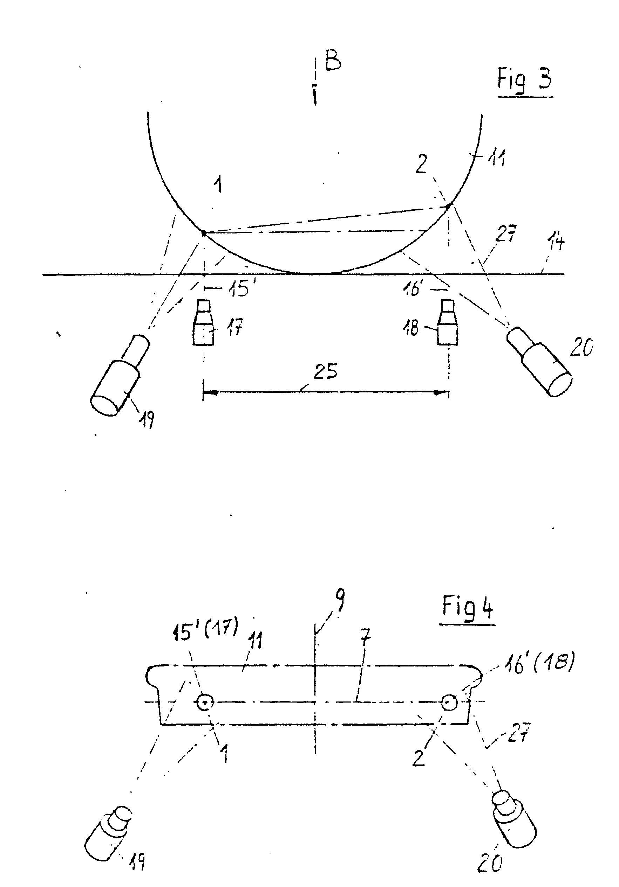

Die elektromagnetischen Strahlenbündel 15 und 16, beispielsweise in Form eines Laserstrahls, bilden auf der Lauffläche 3 des Rades 11 einen Punkt 1 und 2 ab, der bei Verwendung eines Laserstrahls als Lichtpunkt sichtbar wird. Zur Erfassung dieses Punktes, im Ausführungsbeispiel des jeweiligen Lichtpunktes 1 und 2, sind in seitlicher Anordnung Empfänger 19 und 20, beispielsweise in Form von CCD-Kameras angeordnet, deren Empfangsbereich den Erwartungsbereich in dem die Punkte 1 und 2 entstehen könne, entspricht. Dieser Erwartungsbereich ist durch die gestrichelten Linien 27 in den Figuren 1 und 2 angedeutet. Eine solche Andeutung findet sich ebenfalls in den Figuren 3 und 4. Es ist in dieser Anordnung auch die Lage der Empfänger 19 und 20 relativ zu den Strahlenquellen 17 und 18 bekannt.

Damit die Strahlenbündel 15 und 16 die Schiene 12 passieren können, ist diese an der entsprechenden Stelle geöffnet und es sind mindestens in diesem Bereich Stützschienen 28 für das Rad 11 vorgesehen. Seitenführungen 29 und 30 können vorgesehen sein um ein unerwünschtes seitliches Auswandern des Rades 11 zu verhindern.

Sowohl die Strahlenquellen 17 und 18, als auch die Empfänger 19 und 20, sind mit einer als CPU ausgebildeten Steuer- und Auswerteeinrichtung 22 verbunden, deren Ausgangssignale beispielsweise auf eine Ausgabeeinheit 23, aber ebensogut in eine Maschinensteuerung gegeben werden können. Als zusätzliche Einrichtung kann an die CPU noch eine Profilerfassungseinrichtung 24 angeschlossen sein. Die Profilerfassungseinrichtung muß hierbei nicht notwendigerweise in räumlicher Nähe der Durchmessererfassungseinrichtung vorgesehen sein. Es gegnügt vielmehr, wenn eine irgendwo angeordnete Profilerfassungseinrichtung 24 die ermittelten Daten der CPU 22 zur Weiterverarbeitung weiterleitet. Hierbei muß natürlich dafür gesorgt werden, daß die Zuordnung des Rades bzw. Radsatzes nicht durch die räumliche Entfernung verloren geht. Unter diesem Aspekt ist es günstiger, die Profilerfassungseinrichtung 24 in räumlicher Nähe zur Durchmessererfassungseinrichtung oder gar als integrierten Bestandteil dieser Einrichtung vorzursehen.

Die Figuren 3 und 4 zeigen ein leichte Modifikation der Anordung nach Figur 1. Bei der Ausführungsform nach den Figuren 3 und 4 können die Empfänger 19 und 20 die gleiche Position aufweisen wie bisher beschrieben. Die Strahlenquellen 17 und 18 sind jedoch unterhalb der Laufebene 14 so angeordnet, daß sie ihre Strahlenbündel 15' bzw. 16' vertikal aufwärts richten, wobei diese Strahlenbündel 15' und 16' innerhalb der Meßkreisebene 7 liegen können. Die Strahlenbündel 15' und 16' verlaufen nun parallel zueinander in einem Abstand 25, der geringer ist als der Durchmesser 6 des kleinsten erwarteten Rades 11. Eine solche Anordnung hat den Vorteil, daß der Rechneraufwand etwas verringert werden kann, weil durch die räumliche Anordnung der Strahlenquellen 17 und 18 die Projektion des Abstandes der angetasteten Punkte 1 und 2 bereits bekannt ist. Diese Anordnung kann noch weiter ergänzt werden, so wie in Figur 5 dargestellt. Auch hier kann die Anordnung der Empfänger 19 und 20 wieder gleich sein wie bisher beschrieben. Es sind auch die Strahlenbündel 15' und 16' angeordnet wie zu Figur 3 bereits beschrieben. In jedem der Strahlenbündel ist jedoch zusätzlich ein halbdurchlässiger Spiegel 31 bzw. 33 angeordnet, der einen Referenzstrahl 33 bzw. 34 zu den Empfängern 19 und 20 schickt. Da die relative Lage der Spiegel 31 und 32 zu der Laufebene 14 bekannt ist, kann in den Empfängern 19 und 20 über die Lage des abgebildeten Punktes 1 bzw. 2 einerseits und über die Lage des Referenzstrahls 33 bzw. 34 andererseits, sofort die vertikale Höhe des Punktes 1 bzw. 2 über der Laufebene 14 ermittelt werden. Bei Bedarf kann noch zusätzlich über einen halbdurchlässigen Spiegel 35 und einen Totalspiegel 36 ein weiterer Strahl 37 zur Erzeugung eines Abbildungspunktes 1' angeordnet werden, so wie in Figur 5 dargestellt.

Mit den beschriebenen Anordnungen ist es möglich unter Zuhilfenahme der Gesetze der Geometrie und der Mathematik die Lage und Länge einer Sehne 5 bzw. 5' mit dazugehöriger Bogenhöhe 4 bzw. 4' zu bestimmen. Eine solche Sehne bestimmt in Verbindung mit einer geeigneten dritten Information einen durch diese Sehne und die dritte Information definierten Kreis. In einer Anordnung nach Figur 1 beispielsweise kann zu irgendeinem Zeitpunkt im Erfassungsbereich 27 der Empfänger 19 und 20 eine Messung derart ausgelöst werden, daß die beispielsweise Laserstrahlen 15 und 16 ständig leuchten und bei einem durchrollenden Rad 11 an der Lauffläche 3 einen Lichtpunkt erzeugen. Sobald dieser Lichtpunkt 1 oder 2 in den Erwartungsbereich 27 eines Empfängers 19 oder 20 eintaucht, entsteht auf der Pixelplatte dieser Empfänger, wenn diese Empfänger z.B. CCD-Kameras sind, ein Signal, das gespeichert wird. Wandert auch beim zweiten Empfänger dieser Lichtpunkt in den Erwartungsbereich 27, so kann in diesem Augenblick oder mit einer gewünschten Zeitverzögerung die Abbildung des Punktes 1 und 2 auf der Pixelplatte der CCD-Kameras 19 und 20 festgehalten und der zugehörige digitalisierte Wert gespeichert werden. Da der Winkel der Laserstrahlen 15 und 16 und die räumliche Anordnung der Sender 17 und 18 und der Empfänger 19 und 20 bekannt ist, kann aus diesen geometrischen Ver-. hältnissen der vertikale Abstand des Punktes 1 und des Punktes 2 von der Laufebene 14 errechnet werden. Weiter kann auch der horizontale Abstand der Punkte 1 und 2 zueinander errechnet werden und es ergibt sich hierdurch gleichzeitig eine evtl. Neigung 21 der von den Punkten 1 und 2 begrenzten Sehne 5 zur Laufebene 14, so daß die Sehne 5 mit der Laufebene 14 beispielsweise einen spitzen Winkel bildet. Die Neigung 21 dieser Sehne 5 ist ein direktes Maß für die Außermittigkeit des Rades 11 im Augenblick der Messung. Sie kann daher bei Bedarf zurückgerechnet werden in die Mittelage, so daß mit einem einfacheren Rechenvorgang auch die Bogenhöhe 4 bestimmt werden kann. Die Bogenhöhe 4 mindestens für die Mittellage des Rades 11, kann auch durch Bestimmung des Aufstandpunktes 10 ermittelt werden. Mit der Bogenhöhe 4 und der Länge der Sehne 5 liegt der Durchmesser 6 des Rades 11 eindeutig fest. Der Durchmesser kann auf diese Art und Weise sehr genau bestimmt werden. Die notwendigen Berechnungen werden in der CPU durchgeführt, die die Rechenergebnisse entweder der Ausgabeeinheit 23 in gewünschter Form zuleitet oder aber einer Steuerung einer Werkzeugmaschine zur Verfügung stellt.

Erfolgt aus irgendeinem Grund die Messung nicht exakt in der Meßkreisebene 7, so ist es möglich über eine Profilerfassungseinrichtung 24 die Profillinie 13 zu ermitteln und damit die Profillinie 13 rechnerisch bis zum Schnittpunkt mit der Meßkreisebene zu verfolgen, so daß jeder beliebige angetastete Punkt 1 oder 2 exakt zurückgerechnet werden kann in die Meßkreisebene 7, ohne daß das Meß- und Rechenergebnis verfälscht würde durch eine evtl. seitliche Fehllage des Rades 11 auf der Schiene 12.

Zur Vermeidung einer Winkellage der Sehne 5 ist es aber auch möglich, während des Durchrollens des Rades 11 durch die ganze Meßeinrichtung die von den Empfängern 19 und 20 im Erwartungsbereich 27 erfaßten Punkte 1 und 2 wandern zu lassen und deren Werte auf der Pixelplatte der Empfänger 19 und 20 ständig abzufragen und erst bei Gleichstand der Werte diesen Gleichstand festzuhalten und seiner Größe nach auszuwerten. Hierzu müssen die Werte sehr schnell und ständig miteinander verglichen werden, was vorteilhafterweise von einer besonderen Einheit außerhalb der CPU durchgeführt wird, wobei bei Gleichstand die CPU aktiviert wird und angewiesen wird den Wert des Gleichstandes auszulesen.

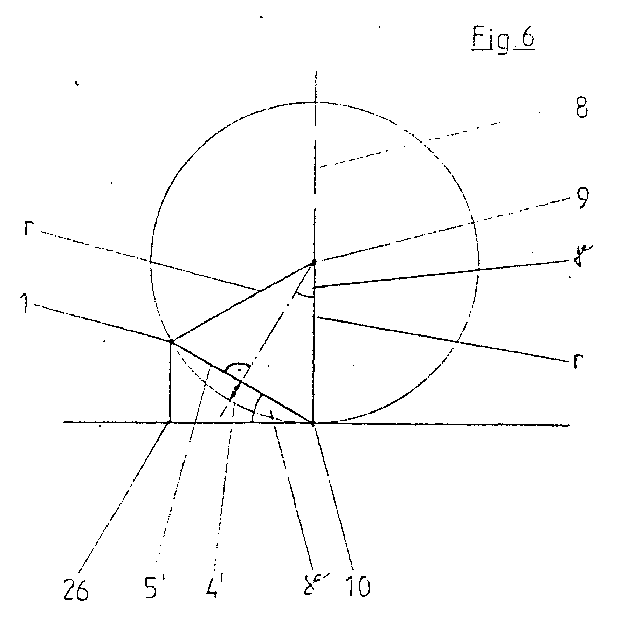

Es ist aber auch möglich nur mit den Punkten 1 und 10 (siehe Figur 1 und Figur 6), das gewünschte Ergebnis zu erzielen. Hierzu wird einerseits der Aufstandspunkt 10 und andererseits der vertikale und laterale Abstand des Punktes 1 zum Punkt 10 ermittelt. Diese Punkte müssen zeitgleich erfaßt werden, um Fehler durch Lageveränderungen zu verhindern. Durch den Meßvorgang hat man zunächst nur 2 Punkte, nämlich die Punkte 1 und 10, die einen Kreis noch nicht eindeutig bestimmen. Da jedoch zusätzlich die Bedingung gemacht wurde, daß Punkt 10 Aufstandspunkt sein soll, ist auch zusätzlich bekannt, daß die Sehne 5' zwischen Punkt 1 und Punkt 10 die Basis eines gleichschenkligen Dreiecks darstellt mit den Seitenlängen "r", die dem Radius des zu ermittelnden Durchmessers 6 des Rades entsprechen. Da die vertikale und laterale Lage des Punktes 1 relativ zu Punkt 10 ermittelbar ist und damit bekannt ist, ist auch die Neigung der Sehen 5' mit dem Winkel Gamma (siehe Figur 6) bekannt. Da es sich um ein gleichschenkliges Dreiecks handelt, zu dem die Sehne 5' die Basis bildet, muß die Mittelsenkrechte zu dieser Sehne 5' den Spitzwinkel des gleichschenkligen Dreiecks halbieren. Der Spitzenwinkel muß aber wegen der Bedingung, daß Punkt 10 Aufstandspunkt ist, in seiner Spitze gleichzeitig Mittelpunkt des Kreises sein, dessen Durchmesser es zu bestimmen gilt. Da nun der Winkel Gamma aber auch gleichzeitig halber Spitzwinkel des gleichschenkligen Dreiecks ist, ist der Radius "r" des Kreises wegen der bekannten Sehnenlänge der Sehne 5' z.B. über eine Sinusfunktion zu ermitteln. Damit kann der Durchmesser 6 über den Radius "r" wieder eindeutig bestimmt werden.

Insgesamt gelingt es mit den beschriebenen Anordnungen den Durchmesser eines Eisenbahnrades in einer gewünschten Meßebene berührungslos und in direkter Messung im eingebauten Zustand und während der Bewegung entlang einer Schiene zu bestimmen. Gleichzeitig ist die Einrichtung einfach in ihrem Aufbau und kann weitgehend handelsübliche Bauelemente verwenden.

Liste der verwendeten Bezugszeichen

| | | |
|---|---|---|
| 1. | Punkt |
| 1' | Punkt |
| 2 | Punkt |
| 3 | Lauffläche |
| 4 | Bogenhöhe |
| 4' | Bogenhöhe |
| 5 | Sehne |
| 5' | Sehne |
| 6 | Raddurchmesser |
| 7 | Meßkreisebene |

| | |
|---|---|
| 8 | Ebene |
| 9 | Radachse |
| 10 | Aufstandspunkt |
| 11. | Rad |
| 12 | Schiene |
| 13 | Profillinie |
| 14 | Laufebene |
| 15 | elektromagnetisches Strahlenbündel |
| 15' | elektromagnetisches Strahlenbündel |
| 16 | elektromagnetisches Strahlenbündel |
| 16' | elektromagnetisches Strahlenbündel |
| 17 | Strahlenquelle |
| 18 | Strahlenquelle |
| 19 | Empfänger |
| 20 | Empfänger |
| 21 | Sehnenneigung |
| 22 | Steuer- und Auswerteinrichtung |
| 23 | Ausgabeeinheit |
| 24 | Profilerfassungseinrichtung |
| 25 | Abstand |
| 26 | Punkt |
| 27 | Erwartungsbereich |
| 28 | Stützschiene |
| 29 | Seitenführung |
| 30 | Seitenführung |
| 31 | halbdurchlässiger Spiegel |
| 32 | halbdurchlässiger Spiegel |
| 33 | Referenzstrahl |
| 34 | Referenzstrahl |
| 35 | halbdurchlässiger Spiegel |
| 36 | Totalspiegel |
| 37 | Strahl |

**Patentansprüche**

1. Verfahren zur Ermittlung des Durchmessers der Räder von Schienenfahrzeugen mit einer eine Lauffläche aufweisenden Umfangsfläche je Rad, dadurch gekennzeichnet, daß die Lage von zwei in Umfangsrichtung versetzten, beliebigen Punkten (1, 1', 2, 10) auf der Lauffläche (3) dadurch definiert wird, daß zwei elektromagnetische Strahlenbündel (15,16) mit zur Laufebene (14) bekannter Winkellage (Alpha, Beta) die Lauffläche anstrahlen, wobei die elektromagnetischen Strahlenbündel (15,16) in einer Ebene (7) senkrecht zur Radachse (9) verlaufen und zwei angenähert punktförmige auswertbare Reflexionsflächen an der Lauffläche (13) erzeugen und wobei die relative Lage der Strahlenquellen (17,18) zueinander (c,a) bekannt ist und daß die Lage der punktförmigen Reflexionsflächen (1,1'2) relativ zueinander über geeignete Sensoren oder Empfänger (19,20) gleichzeitig ermittelt und daraus die Bogenhöhe (4,4') des Bogens über der die beiden Punkte (1,1',2,10) verbindenden Sehne (5,5') berechnet wird, woraus schließlich der Raddurchmesser (6) bestimmt wird.

2. Verfahren nach Anspruch 1, dadurch gekennzeichnet, daß die Punkte (1,1',2,10) in der Meßkreisebene (7) liegen.

3. Verfahren nach mindestens einem der Ansprüche 1 oder 2, dadurch gekennzeichnet, daß jeder Punkt (1,2) auf einer anderen Seite einer Ebene (8) durch die Radachse (9) und den Aufstandspunkt (10) des Rades (11) auf einer Schiene (12) liegt.

4. Verfahren nach einem der Ansprüche 1 oder 2, dadurch gekennzeichnet, daß beide Punkte (1,1',2,10) auf einer Seite einer Ebene (8) durch die Radachse (9) und den Aufstandspunkt (10) des Rades (11) auf einer Schiene (12) liegen

5. Verfahren nach Anspruch 4, dadurch gekennzeichnet, daß mit jeweils unterschiedlichen, aber für jeden Rechenvorgang gleichzeitig angetasteten Punkten mehrfach der zugehörige Raddurchmesser (6) (Kreisdurchmesser) jeweils unabhängig voneinander berechnet wird.

6. Verfahren nach mindestens einem der Ansprüche 1 bis 5, dadurch gekennzeichnet, daß zusätzlich mittels einer Profilvermessung das Ist-Profil der Lauffläche (3) eines Rades (11) bestimmt wird.

7. Verfahren nach mindestens einem der Ansprüche 1 bis 6, dadurch gekennzeichnet, daß ein Rad sich während der Messung auf einer Laufebene (14) innerhalb einer definierten Meßstrecke bewegt.

8. Verfahren nach mindestens einem der Ansprüche 1 bis 7, dadurch gekennzeichnet, daß als Strahlenbündel (15,16) ein Laserstrahl verwendet wird.

9. Verfahren nach mindestens einem der Ansprüche 1 bis 8, dadurch gekennzeichnet, daß die Antastung in unterschiedlichen Wegpositionen des Rades (11) auf der Laufebene (14) mindestens einmal wiederholt wird.

10. Einrichtung zur Ermittlung des Durchmessers der Räder von Schienenfahrzeugen mit je Rad einer eine Lauffläche aufweisenden Umfangsfläche, gekennzeichnet durch mindestens eine in einem Meßbereich angeordnete Laufebene (14), mindestens eine Einrichtung enthaltend mindestens eine Strahlenquelle (17,18) zur Erzeugung von mindestens zwei punktförmigen Reflexionsflächen (1,1',2) mittels elektromagnetischer Strahlenbündel an der Lauffläche (3) eines Rades (11), mindestens zwei Sensor- oder Empfangseinrichtungen (19,20) zur Erfassung der genannten Reflexionsflächen, sowie eine Steuer- und Auswerteeinrichtung (22), verbunden mit einer Ausgabeeinheit (23), wobei die Steuer- und Auswerteeinrichtung (22) sowohl mit den Empfangseinrichtungen (19,20) als auch mit der Einrichtung zur Erzeugung der Reflexionsflächen (17,18) verbunden ist und wobei diese Einrichtung (17,18) und die genannten Empfangseinrichtungen (19,20) derart relativ zueinander und zur Laufebene (14) angeordnet sind, daß die Erzeugung der Reflexionsflächen und deren Erfassung innerhalb des Meßbereiches möglich ist.

11. Einrichtung mindestens nach Anspruch 10, dadurch gekennzeichnet, daß mindestens eine Strahlenquelle (17,18) zur Erzeugung einer Markierung ein Laser ist.

12. Einrichtung nach mindestens einem der Ansprüche 10 und 11, dadurch gekennzeichnet, daß mindestens eine der genannten Empfangseinrichtungen eine sogen. CCD-Kamera ist.

13. Einrichtung nach mindestens einem der Ansprüche 10 bis 12, dadurch gekennzeichnet, daß der Einrichtung eine Profilerfassungseinrichtung (24) zugeordnet ist.

14. Einrichtung nach Anspruch 13, dadurch gekennzeichnet, daß die Profilerfassungseinrichtung (24) eine Auswerteeinrichtung aufweist, die mit der Auswerteeinrichtung (22) der Durchmessererfassungseinrichtung verbunden ist.

15. Einrichtung nach mindestens einem der Ansprüche 10 bis 14, dadurch gekennzeichnet, daß Schaltmittel vorgesehen sind, die die Einrichtung aktivieren, wenn sich ein Rad (11) im Arbeitsbereich der Einrichtung befindet.

16. Einrichtung nach mindestens einem der Ansprüche 10 bis 15, dadurch gekennzeichnet, daß die Strahlenbündel (15',16') vertikal nach oben gerichtet sind und in der Meßebene (7) einen Abstand (25) aufweisen, der kleiner ist als der Durchmesser (6) des kleinsten erwarteten Rades (11).

17. Verfahren zur Ermittlung des Durchmessers der Räder von Schienenfahrzeugen mit einer eine Lauffläche aufweisenden Umfangsfläche je Rad, dadurch gekennzeichnet, daß die Lage von zwei in Umfangsrichtung versetzten Punkten (1,10) auf der Lauffläche (3) dadurch definiert wird, daß zur Bestimmung des ersten Punktes (1) ein elektromagnetisches Strahlenbündel (15) mit zur Laufebene (14) bekannter Winkellage (Beta) die Lauffläche anstrahlt, wobei das elektromagnetische Strahlenbündel (15) in einer Ebene (7) senkrecht zur Radachse (9) verläuft und eine angenähert punktförmige auswertbare Reflektionsfläche an der Lauffläche (13) erzeugt und daß der zweite Punkt der Aufstandspunkt (10) des Rades (11) auf einer Schiene (12) ist, und daß die Lage der punktförmigen Reflektionsfläche und des Aufstandspunktes relativ zueinander über geeignete Sensoren oder Empfänger gleichzeitig ermittelt und daraus die Bogenhöhe (4') des Bogens über der die beiden Punkte (1,10) verbindenden Sehne (5'9) berechnet wird, woraus schließlich der Raddurchmesser (6) bestimmt wird.

## Claims

1. Method for determining the diameter of the wheels of rail vehicles wherein each wheel has a circumferential surface constituting a rolling surface, characterised in that the positions of any two points (1,1',2,10) on the rolling surface (3) and separated in the circumferential direction are defined by two electromagnetic radiation beams (15, 16) incident on the rolling surface at angles (α, β) relative to the track plane (14) which are known, wherein the electromagnetic radiation beams (15, 16) are directed in a plane (7) perpendicular to the wheel axis (9) and produce two approximately point-form plottable reflection areas on the rolling surface (3), and wherein the relative position of the radiation sources (17, 18) to each other (c, a) is known, and in that the position of the point-form reflection areas (1, 1', 2) relative to each other is determined simultaneously by suitable sensors or receivers (19, 20) and therefrom the arc height (4, 4') of the curvature is calculated from the chord (5, 5') connecting the two points (1,1', 2, 10), wherefrom finally the wheel diameter (6) is determined.

2. Method according to claim 1, characterised in that the points (1, 1', 2, 10) lie in the measuring circle plane (7).

3. Method according to at least one of claims 1 or 2, characterised in that each point (1, 2) lies on respective opposite sides of a plane (8) through the wheel axis (9) and the contact point (10) of the wheel (11) on a rail (12).

4. Method according to one of claims 1 or 2, characterised in that both points (1, 1', 2, 10) lie on one side of a plane (8) through the wheel axis (9) and the contact point (10) of the wheel (11) on a rail (12).

5. Method according to claim 4, characterised in that the relevant wheel diameter (6) (circle diameter) is calculated a multiple number of times independently of each other with respective different points which are however sensed simultaneously for each calculation process.

6. Method according to at least one of claims 1 to 5, characterised in that additionally, by means of a profile measurement, the actual profile of the rolling surface (3) of a wheel (11) is determined.

7. Method according to at least one of claims 1 to 6, characterised in that a wheel moves within a defined measuring zone along a track plane (14) during the measurement.

8. Method according to at least one of claims 1 to 7, characterised in that a laser beam is used as the radiation beam (15, 16).

9. Method according to at least one of claims 1 to 8, characterised in that the sensing is repeated at least once in different displacement positions of the wheel (11) along the track plane (14).

10. Apparatus for determining the diameter of the wheels of rail vehicles where each wheel has a circumferential surface constituting a rolling surface, characterised by at least one track plane (14) arranged in a measuring zone, at least one device comprising at least one radiation source (17, 18) for producing at least two point-form reflection areas (1, 1' ,2) by means of electromagnetic radiation beams incident on the rolling surface (3) of a wheel (11), at least two sensing or receiving devices (19, 20) for detecting the said reflection areas, as well as a control and evaluation device (22), connected to an output unit (23), wherein the control and evaluation device (22) is connected both to the receiving devices (19, 20) and also to the device for producing the reflection areas (17, 18), and wherein this latter device (17, 18) and the said receiving devices (19, 20) are so arranged relative to one another and in relation to the track plane (14) that the production of the reflection areas and their detection is possible within the measuring zone.

11. Apparatus at least according to claim 10, characterised in that at least one radiation source (17, 18) is a laser for producing a marker.

12. Apparatus according to at least one of claims 10 and 11, characterised in that at least one of the said receiving devices is a so-called CCD camera.

13. Apparatus according to at least one of claims 10 to 12, characterised in that the apparatus has associated therewith a profile detecting device (24).

14. Apparatus according to claim 13, characterised in that the profile detecting device (24) comprises an evaluation device which is connected to the evaluation device (22) of the diameter determining apparatus.

15. Apparatus according to at least one of claims 10 to 14, characterised in that switch means are provided which activate the apparatus when a wheel (11) is located in the working zone of the apparatus.

16. Apparatus according to at least one of claims 10 to 15, characterised in that the radiation beams (15', 16') are directed vertically upwards and are separated by a spacing (25) in the measuring plane (7) which is smaller than the diameter (6) of the smallest expected wheel (11).

17. Method for determining the diameter of the wheels of rail vehicles wherein each wheel has a circumferential surface constituting a rolling surface, characterised in that the position of two points (1, 10) on the rolling surface (3) which are spaced in the circumferential direction is defined by, for the determination of the first point (1), directing an electromagnetic radiation beam (15) against the rolling surface at a known angle ($\beta$) to the track plane (14), wherein the electromagnetic radiation beam (15) extends in a plane (7) perpendicular to the wheel axis (9) and produces an approximately point-form plottable reflection area on the rolling surface (13), and in that the second point is the contact point (10) of the wheel (11) on a rail (12), and in that the position of the point-form reflection area and of the contact point relative to each other is detected simultaneously by means of suitable sensors or receivers and therefrom the arc height (4') of the curvature is calculated by means of the chord (5', 9) connecting the two points (1, 10), wherefrom finally the wheel diameter (6) is determined.

**Revendications**

1. Procédé pour déterminer le diamètre des roues de véhicules ferroviaires comportant, pour chaque roue, une surface périphérique présentant une surface de roulement, caractérisé en ce que l'on définit la position de deux points quelconques (1, 1', 2, 10) sur la surface de roulement qui sont décalés dans la direction périphérique, par le fait que deux faisceaux de rayonnement électromagnétique (15, 16) sont projetés sur la surface de roulement suivant une position angulaire (Alpha, Béta) connue par rapport au plan de roulement (14), étant précisé que les faisceaux de rayonnement électromagnétique (15, 16) sont orientés dans un plan (7) perpendiculaire à l'axe (9) de la roue et produisent sur la surface de roulement (13) deux surfaces de réflexion approximativement ponctuelles, pouvant être analysées, et étant précisé que la position relative des sources de rayonnement (17, 18) l'une par rapport à l'autre (c,a) est connue, et en ce que l'on détermine simultanément la position des surfaces de réflexion ponctuelles (1, 1'2) l'une par rapport à l'autre au moyen de détecteurs ou de récepteurs appropriés (19, 20), et en ce que l'on en déduit par le calcul la flèche (4, 4') de l'arc que sous-tend la corde (5, 5') reliant les deux points (1, 1', 2, 10) et à partir de laquelle on déduit finalement le diamètre (6) de la roue.

2. Procédé selon la revendication 1, caractérisé en ce que les points (1, 1', 2, 10) sont situés dans le plan (7) du cercle de mesure.

3. Procédé selon au moins l'une des revendications 1 ou 2, caractérisé en ce que les points (1, 2) sont situés de part et d'autre d'un plan (8) passant par l'axe (9) de la roue et par le point d'appui (10) de la roue (11) sur un rail (12).

4. Procédé selon l'une des revendications 1 ou 2, caractérisé en ce que les deux points (1, 1', 2, 10) sont situés sur un côté d'un plan (8) passant par l'axe (9) de la roue et par le point d'appui (10) de la roue (11) sur un rail (12).

5. Procédé selon la revendication 4, caractérisé en ce que l'on calcule plusieurs fois, indépendamment, le diamètre correspondant (6) de la roue (diamètre du cercle), avec des points chaque fois différents mais contactés simultanément pour chaque processus de calcul.

6. Procédé selon au moins l'une des revendications 1 à 5, caractérisé en ce qu'on détermine en outre le profil réel de la surface de roulement (3) d'une roue (11) au moyen d'une mesure de profil.

7. Procédé selon au moins l'une des revendications 1 à 6, caractérisé en ce que, pendant la mesure, une roue se déplace sur un plan de roulement (14) à l'intérieur d'une plage de mesure définie.

8. Procédé selon au moins l'une des revendications 1 à 7, caractérisé en ce qu'on utilise un rayon laser comme faisceau de rayonnement (15, 16).

9. Procédé selon au moins l'une des revendications 1 à 8, caractérisé en ce qu'on répète la détection au moins un fois dans des positions différentes de trajectoire de la roue (11) sur le plan de roulement (14).

10. Dispositif pour déterminer le diamètre des roues de véhicules ferroviaires comportant, pour chaque roue, une surface périphérique présentant une surface de roulement, caractérisé par au moins un plan de roulement (14) disposé dans une zone de mesure, au moins un dispositif contenant au moins une source de rayonnement (17, 18) pour produire, au moyen de faisceaux de rayonnement électromagnétique, au moins deux surfaces de réflexion ponctuelles (1, 1', 2) sur la surface de roulement (3) d'une roue (11), au moins deux dispositifs de détection ou de réception (19, 20) pour détecter les surfaces de réflexion précitées, ainsi qu'un dispositif de commande et d'analyse (22) relié à une unité de sortie (23), le dispositif de commande et d'analyse (22) étant relié aussi bien aux dispositifs de réception (19, 20) qu'au dispositif de production des surfaces de réflexion (17, 18) tandis que ce dispositif (17, 18) et les dispositifs de réception précités (19, 20) sont disposés les uns par rapport aux autres et par rapport au plan de roulement (14), de telle façon que la production des surfaces de réflexion et leur détection sont possibles à l'intérieur de la zone de mesure.

11. Dispositif selon au moins la revendication 10, caractérisé en ce qu'au moins une source de rayonnement (17, 18) pour produire un marquage est un laser.

12. Dispositif selon au moins l'une des revendications 10 et 11, caractérisé en ce qu'au moins un des dispositifs de réception précités est une camera dite à mémoire CCD.

13. Dispositif selon au moins l'une des revendications 10 à 12, caractérisé en ce qu'un dispositif de détection de profil (24) est associé au dispositif.

14. Dispositif selon la revendication 13, caractérisé en ce que le dispositif de détection de profil (24) présente un dispositif d'analyse qui est relié au dispositif d'analyse (22) du dispositif de détection de diamètre.

15. Dispositif selon au moins l'une des revendications 10 à 14, caractérisé en ce que sont prévus des moyens de commutation qui activent le dispositif lorsqu'une roue (11) se trouve dans la zone de travail du dispositif.

16. Dispositif selon au moins l'une des revendications 10 à 15, caractérisé en ce que les faisceaux de rayonnement (15', 16') sont orientés verticalement vers le haut et présentent dans le plan de mesure (7), un espacement (25) qui est inférieur au diamètre (6) de la plus petite roue escomptée (11).

17. Procédé pour déterminer le diamètre des roues de véhicules ferroviaires comportant, pour chaque roue, une surface périphérique présentant une surface de roulement, caractérisé en ce que l'on définit la position de deux points (1, 10) sur la surface de roulement (3), qui sont décalés dans la direction de la périphérie, par le fait que pour déterminer le premier point (1), un faisceau de rayonnement électromagnétique (15) est projeté sur la surface de roulement suivant une position angulaire (Béta) connue par rapport au plan de roulement (14), étant précisé que le faisceau de rayonnement électromagnétique (15) est orienté dans un plan (7) perpendiculaire à l'axe (9) de la roue et produit sur la surface de roulement (13) une surface de réflexion approximativement ponctuelle pouvant être analysée, et que le second point est le point d'appui (10) de la roue (11) sur un rail (12), et en ce que l'on détermine simultanément la position de la surface de réflexion ponctuelle et du point d'appui l'un par rapport à l'autre au moyen de détecteurs ou de récepteurs appropriés, et en ce que l'on en déduit par le calcul la flèche (4') de l'arc que sous-tend la corde (5') reliant les deux points (1, 10), à partir de laquelle on détermine finalement le diamètre (6) de la roue.

Fig. 1

Fig. 2

Fig 3

Fig 4

13

Fig.5

Fig 6